# EUROPEAN PATENT APPLICATION

(11) **EP 4 755 534 A1**
(43) Date of publication of application: **10.06.2026**
(21) Application number: 25837568.2
(22) Date of filing: 24.06.2025
(51) Int. Cl.: B08B 9/34, H01M 4/04, B01F 27/80

(54) **ELECTRODE MIXER CLEANING SYSTEM**

(30) Priority: 11.07.2024 KR 20240091780
(71) Applicant: LG Energy Solution, Ltd., Seoul 07335 (KR)
(72) Inventor: KIM, Na Hyun, Daejeon 34122 (KR); KWON, Jeonghoon, Daejeon 34122 (KR); SEO, Won Sic, Daejeon 34122 (KR); CHUNG, Hae Kang, Daejeon 34122 (KR); KIM, Gyeongtae, Daejeon 34122 (KR)
(74) Representative: Plasseraud IP
(86) International application number: PCT/KR2025/008786
(87) International publication number: WO 2026/014766

(57) **Abstract**

According to an embodiment of the present disclosure, provided is an electrode mixer cleaning system, comprising:
a storage tank that stores a solvent;
a flow meter that measures the solvent;
a pressure tank that stores the measured solvent;
a mixer that mixes an electrode material and a solvent;
a first pump that sends only the amount of the solvent measured by the flow meter to the pressure tank through a first pipe;
a second pump that sends the solvent from the pressure tank to the mixer through a second pipe under the condition that the pressure is increased; and
a high pressure spray nozzle (HPSN) that is disposed in the mixer and introduces the solvent into the mixer.

## Description

### TECHNICAL FIELD

### Cross-Reference to Related Application(s)

This application claims priority to and the benefit of Korean Patent Application no. KR10-2024-0091780, filed on July 11, 2024, the disclosure of which is hereby incorporated by reference in its entirety.

The present disclosure relates to an electrode mixer cleaning system.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Presently, commercially available secondary batteries include nickel-cadmium batteries, nickel-hydrogen batteries, nickel-zinc batteries, and lithium secondary batteries. Of these batteries, the lithium secondary battery has come into the spotlight because they have advantages, for example, being freely charged and discharged, and having very low self-discharge rate and high energy density.

A lithium secondary battery primarily uses a lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are disposed with a separator interposed therebetween, and an exterior material, i.e., battery case, which hermetically houses the electrode assembly together with an electrolyte solution.

Such secondary batteries are widely used in not only small devices such as portable electronic devices, but also medium- and large-scale devices such as vehicles and energy storage systems, and the extent of its use is rapidly increasing. Moreover, recently, there has been a growing trend of utilizing residential battery packs for electricity storage purposes.

The manufacturing process of such a lithium secondary battery is roughly classified into an electrode process, an assembly process, and a formation process. The electrode process may be divided into an active material mixing process, an electrode coating process, a rolling process, a slitting process, a winding process, and the like. Among them, the active material mixing process is a process of preparing an electrode slurry, and refers to the process of stirring and mixing an electrode material such as active materials and a solvent in a mixer.

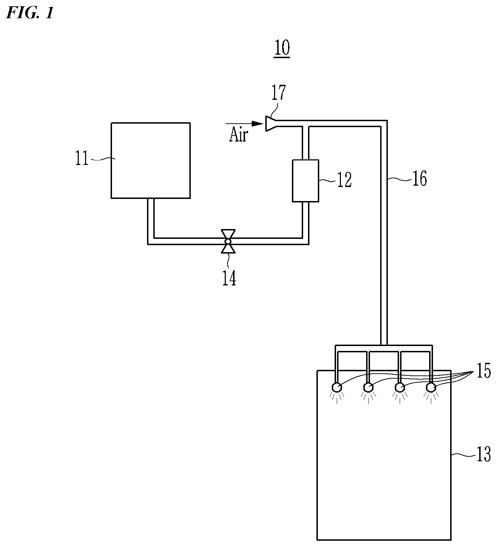

FIG. 1 illustrates a schematic layout of this mixing process 10.

Referring to FIG. 1, the solvent stored in a storage tank 11 is introduced into a mixer 13 through a pipe 16 by the operation of a pump 14 if measurement of the solvent by a flow meter 12 is completed. At this time, the nozzle 15 is a general liquid injection nozzle to which no pressure is applied.

At this time, the amount of the solvent measured by the flow meter 12 is determined in consideration of the solid content of the electrode slurry obtained at the time of producing the electrode slurry.

Further, when the introduction of the solvent by the operation of the pump 14 as above is completed, the remaining solvent is introduced into the pipe 16 by air purging in which air is injected from an air inlet part 17 connected to the pipe 16.

However, in this mixing process, there is a problem that electrode materials such as active materials accumulate inside the mixer and in the slurry on the upper end of the stirrer. Therefore, if the mixing process is performed continuously without a process of cleaning the inside of the mixer, not only the electrode materials are accumulated for a long period of time, making cleaning difficult, but also there is a solid content spec out issue where the solid content, which is a quality item of the slurry, changes, that is, there is a problem that some of the electrode material accumulates inside the mixer and the stirrer, resulting in a problem where the solid content in the slurry is insufficient, or the content of solids increases as the accumulated material falls.

Therefore, there is an urgent need to develop a technology for cleaning electrode mixers that can solve these problems.

### DETAILED DESCRIPTION OF THE INVENTION

### Technical Problem

It is an object of the present disclosure to clean the inside of a mixer by introducing a solvent into a mixer at high pressure, thereby drastically reducing the electrode material load inside the mixer, as well as reducing the mixer cleaning time, extending the additional cleaning period, thereby enabling a reduction in the time and manpower consumed for cleaning.

However, the technical objects to be solved by embodiments of the present disclosure are not limited to the above-described objects, and can be variously expanded within the scope of the technical idea included in the present disclosure.

### Technical Solution

According to an aspect of the present disclosure, there is provided an electrode mixer cleaning system, comprising:
a storage tank that stores a solvent;
a flow meter that measures the solvent;
a pressure tank that stores the measured solvent;
a mixer that mixes an electrode material and a solvent;
a first pump that sends only the amount of the solvent measured by the flow meter to the pressure tank through a first pipe;
a second pump that sends the solvent from the pressure tank to the mixer through a second pipe under the condition that the pressure is increased; and
a high pressure spray nozzle (HPSN) that is disposed in the mixer and introduces the solvent into the mixer.

In addition, the electrode mixer cleaning system further comprises a third pipe that is connected at its one end to the first pipe and connected at the other end to the first air inlet part, wherein air may be injected into the pressure tank via the third pipe.

Moreover, the electrode mixer cleaning system further comprises a fourth pipe that is connected at its end to the pressure tank and connected at the other end to the second air inlet part, wherein the fourth pipe may be connected to the second pipe at its middle.

The first pipe may be formed with a first valve, and the second pipe may be formed with a second valve.

The high pressure spray nozzle (HPSN) may include 3 to 6 nozzles.

The electrode mixer cleaning system may further comprise a pressure gauge for measuring the pressure of the solvent in the second pipe, and a level switch for measuring the current.

Thus, if the pressure of the solvent measured by the pressure gauge is 10 bar or less and the current measured by the level switch is 5 mA or less, the operation of the second pump may be stopped.

The solvent may be distilled water (DI water).

On the other hand, if measurement of the solvent by the flow meter is completed, the first valve is opened and the solvent is stored in the pressure tank, and then if the first valve is closed and the second valve is opened, the solvent may be introduced into the mixer by the operation of the second pump.

Here, the solvent may be introduced into the mixer by the second pump at a pressure of 90 to 120 bar.

After the introduction of the solvent into the mixer by the second pump, air purging may be performed by injecting air into the first air inlet part and introducing the solvent remaining in the pressure tank and the second pipe into the mixer.

In this case, the air purging is performed in a state where the first valve is opened, and after the air purging is completed, the vent valve of the pressure tank may be opened, and the first valve and the second valve may be closed.

Moreover, when the solvent is introduced from the pressure tank into the mixer by the second pump, an unintroduced solvent may be generated due to the difference between the flow rate of the second pump and the flow rate of the high pressure spray nozzle, and the unintroduced solvent may flow back into the pressure tank through the fourth pipe.

Here, the unintroduced solvent may be mixed with the solvent existing in the pressure tank and again introduced into the mixer via a second line by a second pump.

### BRIEF DESCRIPTION OF THE DRAWINGS

FIG. 1 is a schematic diagram illustrating the layout of a part of a conventional electrode slurry preparation process system in which an electrode material and a solvent are mixed.
FIG. 2 is a schematic diagram illustrating the layout of an electrode mixer cleaning system according to an embodiment of the present disclosure.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

On the other hand, since sizes and thicknesses of each element shown in the drawings are arbitrarily given for better understanding and ease of description, the present inventive concept is not limited to the illustrated sizes and thicknesses.

Further, throughout the description, when a portion is referred to as "including" or "comprising" a certain component, it means that the portion can further include other components, without excluding the other components, unless otherwise stated.

Furthermore, throughout the description, "one end" means one side end of the length formed by the part, and "the other end" means the other side end of the length formed by the part.

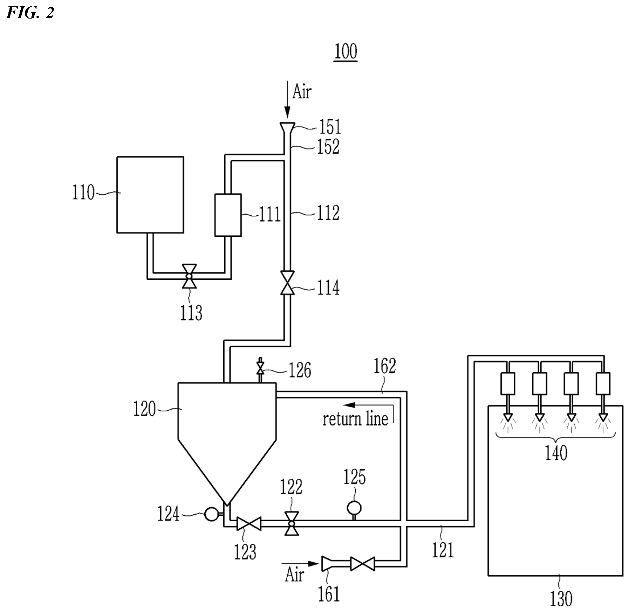

FIG. 2 is a schematic diagram illustrating the layout of an electrode mixer cleaning system according to an embodiment of the present disclosure.

Referring to FIG. 2, an electrode mixer cleaning system according to the present disclosure is configured to comprise: a storage tank 110 that stores a solvent; a flow meter 111 that measures the solvent; a pressure tank 120 that stores the measured solvent; a mixer 130 that mixes an electrode material and a solvent; a first pump 113 that sends only the amount of the solvent measured by the flow meter 111 to the pressure tank 120 through a first pipe 112; a second pump 122 that sends the solvent from the pressure tank 120 to the mixer 130 through a second pipe 121 under the condition that the pressure is increased; and a high pressure spray nozzle (HPSN) 140 that is disposed in the mixer 130 and introduces the solvent into the mixer 130.

Here, the storage tank 110 stores the solvent and is connected to the first pipe 112, and the first pipe 112 is formed with a first valve 114, a first pump 113, and a flow meter 111.

The solvent used in the electrode mixer cleaning system may be an organic solvent or an aqueous solvent, and particularly, it is affected by the electrode material mixed in the mixer. Specifically, when the electrode material is a positive electrode material, the solvent may be an organic solvent, and when the electrode material is a negative electrode material, the solvent may be an organic solvent or an aqueous solvent, particularly, distilled water (DI water).

The solvent is transferred from the storage tank 110 to the pressure tank 120 through the first pipe 112. At this time, the solvent is sent to the pressure tank 120 in a state where measurement of the solvent by the flow meter 111 is completed.

At this time, according to an embodiment of the present disclosure, the cleaning of the mixer 130 may be performed simultaneously with the production of the electrode slurry. In this case, the measurement of the solvent may be determined in consideration of the solvent content, i.e., the solid content, viscosity, etc., of the electrode slurry.

As another example, if the cleaning of the mixer 130 is not performed simultaneously with the production of the electrode slurry, the solvent may be measured and transferred in an amount calculated as much as required only for cleaning the mixer 130.

However, in any case, those identical to a solvent for the electrode slurry may be used as the solvent, thereby enhancing the cleaning power of the mixer 130, preventing the residual solvent from acting as an impurity in the subsequent production of the electrode slurry, and preventing the deterioration of the electrode slurry quality.

The transfer is performed by the first pump 113 and operates until the solvent is supplied to the pressure tank 120 by the amount measured by the flow meter 111. This operation starts at a state that the first valve 114 is opened, and the second valve 123 formed in the second pipe 121 connecting the pressure tank 120 and the mixer 130 is closed.

Subsequently, when the measurement of the solvent into the pressure tank 120 is completed, the first pump 113 stops operating and the first valve 114 closes. The pressure tank 120 stores the measured solvent and is connected to the second pipe 121, wherein the second pipe 121 is formed with the second valve 123 and the second pump 122.

After when the measurement of the solvent into the pressure tank 120 is completed and the first valve 114 is closed, the second valve 123 is opened and the second pump 122 is operated to introduce the measured solvent into the mixer 130.

At this time, the measured solvent is introduced into the mixer 130 by a high pressure spray nozzle (HPSN) 140. The high pressure spray nozzle (HPSN) 140 can introduce the solvent into the mixer 130 by high pressure, and the introduction of the solvent by the high pressure spray nozzle 140 can be made at once in various directions so that the inside of the mixer can be cleaned entirely, which is more advantageous for cleaning compared to the conventional liquid injection nozzle.

In addition, the high pressure spray nozzle 140 is capable of fine spraying and can be used when the introduction pressure is high.

Therefore, the inside of the mixer 130 can be cleaned entirely by the high pressure spray nozzle 140.

Moreover, the high pressure spray nozzle 140 may include specifically 3 to 6 nozzles within the mixer, and more specifically, it may be formed of 4 nozzles. Further, the high pressure spray nozzles 140 may be formed at equal intervals from each other in a circumferential direction of the inner wall of the mixer for easy cleaning and overall cleaning of the mixer 130.

If the number of high pressure spray nozzles is outside the above range and is less than three, the inside of the mixer cannot be thoroughly cleaned, and if the high pressure spray nozzles are formed in excess of 6 nozzles, it is inefficient.

Meanwhile, the solvent for cleaning the inside of the mixer 130 can be introduced by the second pump 122 at a pressure of 90 bar to 120 bar, and more specifically, the solvent can be introduced at a pressure of 100 bar to 110 bar, and more specifically, the solvent may be introduced at a pressure of 100 bar to 105 bar.

At this time, if the cleaning is performed at a lower pressure than the above range, the effect intended by the present disclosure cannot be obtained, and performing the cleaning at a higher pressure causes difficulties in the operation and increases equipment costs, etc.

Therefore, according to the present disclosure, the second pipe 121 may further comprise a pressure gauge 124 for measuring the pressure of the solvent, and a level switch 125 for measuring the current.

The pressure gauge 124 and the level switch 125 serve to stop the operation of the second pump 122 when the solvent is not introduced into the mixer 130. If the second pump 122 is operated even when the solvent is not introduced, there is a possibility of equipment failure, so that the operation of the second pump 122 can be adjusted using the pressure gauge 124 and the level switch 125.

Specifically, when both the pressure gauge 124 and the level switch 125 are equal to or less than the specified condition, the operation of the second pump 122 is stopped, which is for addressing the case where one of the two fails.

Specifically, when the pressure of the solvent measured by the pressure gauge 124 is 10 bar or less and the current measured by the level switch 125 is 5 mA or less, the operation of the second pump 122 may be stopped.

When the high pressure solvent is introduced in this manner, not only the cleaning inside the mixer 130 is easily performed and the cleaning cycle by a separate operator can be increased, which increases process efficiency and reduces the workload of the operator, but also it has the effect of being applicable at each location, dramatically reducing the change in the solid content in the electrode slurry, and improving the quality of the electrode slurry.

Meanwhile, in the process of introducing a solvent in the pressure tank 130 into the mixer 130 by the second pump 122, an unintroduced solvent may be generated due to the difference between the flow rate of the second pump 122 and the flow rate of the high pressure spray nozzle 140.

Therefore, according to the present disclosure, the electrode mixer cleaning system may further comprise a fourth pipe 162 connected at its one end to the pressure tank 120 and connected at the other end to the second air inlet part 161, wherein the fourth pipe 162 is connected to the second pipe 121, so that the unintroduced solvent is transferred to the pressure tank 120 through a return line via the fourth pipe 162.

The unintroduced solvent sent back to the pressure tank 120 in this manner is mixed with the solvent present in the pressure tank 120 and can be introduced into the mixer 130 through the second pipe 121 by the second pump 122, so that all of the measured solvent can be introduced into the mixer 130 without any loss of solvent.

When the introduction of the unintroduced solvent into the mixer through the return line is completed, the operation of the second pump 122 is stopped, air is injected through the second air inlet part 161 connected to the fourth pipe 162, and even the small amount of solvent remaining in the fourth pipe 162 is transferred to the pressure tank 120.

After that, as described above, since the solvent is introduced in a measured amount to either clean a mixer or clean only the mixer 130 while being used in the production of the electrode slurry, it is important to introduce the entire amount without loss of the solvent, and therefore, air purging can be performed after the solvent is introduced by the second pump 122.

By the air purging, the residual solvent remaining in the pressure tank 120 of the solvent and the first pipe 112 and the second pipe 121 can be further introduced into the mixer 130.

Therefore, at the time of air purging, the first valve 114 is opened, and air is injected from the first air inlet part 151 and injected into the first pipe 112 through the third pipe 152 connected at its one end to the first pipe 112 and connected at the other end to the first air inlet part 151, even the solvent remaining in the pressure tank 120, the first pipe 112, and the second pipe 121 can be introduced into the mixer 130.

At this time, the air purging may be performed at a pressure of 1 bar to 10 bar, specifically 2 bar to 8 bar, more specifically 2 bar to 5 bar for 30 seconds to 2 minutes, specifically 1 minute to 2 minutes.

The whole amount of the solvent measured therefrom can be introduced into the mixer 130.

When this air purging is completed, the vent valve 126 of the pressure tank 120 is opened, and both the first valve 114 and the second valve 123 are closed, so that the cleaning of the mixer 130 is completed.

In the electrode mixer cleaning system according to the present disclosure, since the whole of the measured solvent can be used in this manner, the cleaning of the mixer 130 can be performed simultaneously with the production of the electrode slurry in which the adjustment of the solvent content is important.

That is, when the content of the solvent used in the electrode slurry is measured and introduced into the mixer 130, the electrode material that may accumulate in the upper end of the mixer 130 and in a stirrer (not shown), etc. can be removed at the same time if it is introduced through the high pressure spray nozzle 140 under the pressure in the above range.

Therefore, the electrode mixer cleaning system according to the present disclosure can be performed simultaneously with the production of the electrode slurry, and thus, not only can dramatically reduce the non-operational loss of the mixer equipment and shorten the cleaning time to improve the process efficiency, but also improve the quality of the electrode slurry and can be cleaned at each location, thereby improving the quality of the electrode slurry.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### Industrial Applicability

According to the present disclosure, the mixer is cleaned by introducing the solvent into the mixer at high pressure through a high pressure spray nozzle (HPSN), thereby having the effect of reducing the time and manpower consumed for washing.

In addition, when the amount of solvent contained in the electrode slurry is measured and applied, the electrode slurry production and the mixer cleaning can be performed at the same time, and cleaning can be performed at each location, thereby enabling continuous cleaning without non-operational loss of the equipment, and increasing the cleaning cycle by operators.

## Claims

1. An electrode mixer cleaning system, comprising:
a storage tank that stores a solvent;
a flow meter that measures the solvent;
a pressure tank that stores the measured solvent;
a mixer that mixes an electrode material and a solvent;
a first pump that sends only the amount of the solvent measured by the flow meter to the pressure tank through a first pipe;
a second pump that sends the solvent from the pressure tank to the mixer through a second pipe under the condition that the pressure is increased; and
a high pressure spray nozzle (HPSN) that is disposed in the mixer and introduces the solvent into the mixer.

2. The electrode mixer cleaning system according to claim 1,
further comprising a third pipe that is connected at its one end to the first pipe and connected at the other end to the first air inlet part, wherein air is injected into the pressure tank via the third pipe.

3. The electrode mixer cleaning system according to claim 1,
further comprising a fourth pipe that is connected at its end to the pressure tank and connected at the other end to the second air inlet part, wherein the fourth pipe is connected to the second pipe at its middle.

4. The electrode mixer cleaning system according to claim 1, wherein:
the first pipe is formed with a first valve, and the second pipe is formed with a second valve.

5. The electrode mixer cleaning system according to claim 1, wherein:
the high pressure spray nozzle (HPSN) comprises 3 to 6 nozzles.

6. The electrode mixer cleaning system according to claim 1, wherein:
the electrode mixer cleaning system further comprises a pressure gauge for measuring the pressure of the solvent, and a level switch for measuring the current in the second pipe.

7. The electrode mixer cleaning system according to claim 6, wherein:
if the pressure of the solvent measured by the pressure gauge is 10 bar or less and the current measured by the level switch is 5 mA or less, the operation of the second pump is stopped.

8. The electrode mixer cleaning system according to claim 1, wherein:
the solvent is distilled water (DI water).

9. The electrode mixer cleaning system according to any one of claims 1 to 8, wherein:
if measurement of the solvent by the flow meter is completed, the first valve is opened and the solvent is stored in the pressure tank, and then if the first valve is closed and the second valve is opened, the solvent is introduced into the mixer by the operation of the second pump.

10. The electrode mixer cleaning system according to any one of claims 1 to 8, wherein:
after the introduction of the solvent into the mixer by the second pump, air purging is performed by injecting air into the first air inlet part and introducing the solvent remaining in the pressure tank and the second pipe into the mixer.

11. The electrode mixer cleaning system according to claim 10, wherein:
the air purging is performed in a state where the first valve is opened, and after the air purging is completed, the vent valve of the pressure tank is opened, and the first valve and the second valve are closed.

12. The electrode mixer cleaning system according to any one of claims 1 to 8, wherein:
when the solvent is introduced from the pressure tank into the mixer by the second pump, an unintroduced solvent is generated due to the difference between the flow rate of the second pump and the flow rate of the high pressure spray nozzle, and the unintroduced solvent flows back into the pressure tank through the fourth pipe.

13. The electrode mixer cleaning system according to claim 12, wherein:
the unintroduced solvent is mixed with the solvent existing in the pressure tank and is again introduced into the mixer via a second line by a second pump.

14. The electrode mixer cleaning system according to any one of claims 1 to 8, wherein:
the solvent is introduced into the mixer by the second pump at a pressure of 90 to 120 bar.
